# EUROPÄISCHE PATENTANMELDUNG

(11) **EP 4 668 104 A1**
(43) Veröffentlichungstag der Anmeldung: **24.12.2025**
(21) Anmeldenummer: 24182875.5
(22) Anmeldetag: 18.06.2024
(51) Int. Cl.: G06F 8/65, F03D 7/04

(54) **VERFAHREN ZUM AKTUALISIEREN EINER EINHEIT EINES WINDPARKS SOWIE SYSTEM DAFÜR**

(71) Anmelder: Wobben Properties GmbH, 26607 Aurich (DE)
(72) Erfinder: Poolmann, Alexander, 26632 Ihlow (DE)
(74) Vertreter: Eisenführ Speiser

(57) **Zusammenfassung**

Die Erfindung betrifft ein Verfahren zum Aktualisieren mindestens einer Einheit (22), insbesondere einer Windenergieanlage (100), mindestens eines von mehreren Windparks (14), mit einer außerhalb des Windparks (14) angeordneten Aktualisierungseinrichtung, wobei die Aktualisierungseinrichtung eingerichtet ist, eine Datenverbindung mit mehreren Windparks (14) aufzubauen. Das Verfahren umfasst ein Bereitstellen einer Datenbank (34), ein Empfangen einer Auswahl mindestens einer Einheit (22) aus der Datenbank (34) durch die Aktualisierungseinrichtung, ein Zusammenstellen eines Pakets für den Windpark (14), ein Übertragen des Pakets durch die Aktualisierungseinrichtung von der Aktualisierungseinrichtung in den Windpark (14) mit der Einheit (22) oder die Einheit (22) der Auswahl. Das Verfahren umfasst ferner ein Ausgeben einer Information nach Fertigstellung der Übertragung durch die Aktualisierungseinrichtung, ein Warten auf den Empfang einer Genehmigung zur Ausführung der Aktualisierung, ein Ausführen der Aktualisierung nach Empfang einer Genehmigung, ein Empfangen einer Bestätigung über eine erfolgreiche Aktualisierung und ein Speichern eines Indikators über die erfolgreiche Aktualisierung in der Datenbank (34).

Die Erfindung betrifft ferner ein System (10) zum Aktualisieren mindestens einer Einheit (22) eines Windparks (14).

## Beschreibung

Die Erfindung betrifft ein Verfahren zum Aktualisieren mindestens einer Einheit, insbesondere einer Windenergieanlage, mindestens eines von mehreren Windparks. Außerdem betrifft die Erfindung ein System zum Aktualisieren der Einheit.

Windenergieanlagen sind allgemein bekannt und wandeln kinetische Energie aus dem Wind in elektrische Energie um. Die elektrische Energie wird in ein elektrisches Versorgungsnetz eingespeist. Die Windenergieanlage selbst und der gesamte Umwandlungsprozess von der Entnahme der kinetischen Energie aus dem Wind bis hin zur Einspeisung der elektrischen Energie in das Netz stellt die Windenergieanlage vor komplexe Aufgaben. Zur Ausführung dieser Aufgaben sind eine Vielzahl von unterschiedlichen elektronischen Steuereinheiten vorgesehen, die beispielsweise jeweils Gruppen von Aktoren in Abhängigkeit von Sensoreingängen und Steuersignalen steuern.

Die Steuereinheiten erzeugen beispielsweise Ausgabedaten zur Ansteuerung von Aktoren in Abhängigkeit von Eingabedaten von Sensoren oder Daten weiterer Steuereinheiten. Die Ausgabedaten werden mit einer Software der Steuereinheit durch Verarbeiten der Eingabedaten erzeugt. Aufgrund sich über die Laufzeit einer Windenergieanlage häufig ändernder Anforderungen, die in jüngster Zeit auch immer stärker zunehmen, ist eine Aktualisierung des Betriebs einer Software durch neue Parameter häufig nicht möglich und eine regelmäßige Aktualisierung der Software in Einheiten eines Windparks, wie Windenergieanlagen, einem zentralen Windparkrechner oder auch weiteren Einheiten des Windparks, wie Energiespeichereinrichtungen, nötig.

Mit wachsender Funktionalität der Windenergieanlage steigt zudem auch die Anzahl der aktualisierbaren Steuereinheiten oder Module einer Einheit. Eine Aktualisierung ist beispielsweise auch nötig, um Verträge, beispielsweise mit einem Betreiber des elektrischen Versorgungsnetzes, in die ein Windpark einspeist, einzuhalten. Demnach ist eine regelmäßige Aktualisierung unerlässlich.

Eine Aktualisierung einer Software einer Einheit eines Windparks, wie einer Windenergieanlage, setzt üblicherweise einen signifikanten Eingriff in den Betrieb der Windenergieanlage ein, um die Windenergieanlage in einen sicheren Betriebsmodus zu versetzen. Undefinierbare Betriebssituation selbst bei kurzzeitigem Verlust der Steuerfähigkeit während der Aktualisierung müssen nämlich vermieden werden, um die Sicherheit zu gewährleisten. Da ein solcher Eingriff auch Auswirkungen auf andere Komponenten des Windparks oder das Netz haben kann, kann dieser nicht spontan erfolgen, sondern muss möglichst genau geplant werden.

Ein solcher Eingriff wird zudem üblicherweise unter Beobachtung eines Servicemitarbeiters vorgenommen, der die Aktualisierung ausführt. Der Servicemitarbeiter muss für eine Aktualisierung einer Einheit gut ausgebildet sein. Beispielsweise ist es nämlich die Aufgabe des Servicemitarbeiters zu erkennen, welches Modul der Windenergieanlage überhaupt mit einer Softwareaktualisierung aktualisierbar ist, da hierfür eine neue Version bereitsteht.. Zudem muss der Servicemitarbeiter erkennen, welches Modul möglicherweise trotz eines verfügbaren Softwareupdates nicht aktualisiert werden darf, um beispielsweise die genannten Verträge einzuhalten.

Daher muss ein Servicemitarbeiter eine Aktualisierung im Vorhinein genau planen, um beispielsweise benötigte Dateien für eine Softwareaktualisierung vor Ort verfügbar zu haben, insbesondere dann, wenn die Windenergieanlage nur über sehr langsame Datenverbindungen verfügt, die ein Laden der Dateien in einem angemessenen Zeitraum teilweise nahezu unmöglich machen. Ist in einem solchen Fall einer langsamen Datenverbindung eine benötigte Softwareaktualisierung durch einen Servicemitarbeiter nicht verfügbar, so bleibt entweder nur ein sehr langandauernder Einsatz, um während dieses Einsatzes die Softwareaktualisierung zu laden, oder ein erneutes Anfahren der zu aktualisierenden Einheit ist nötig.

Demnach besteht die Problematik in der Aktualisierung einer Software einerseits darin, dass eine Aktualisierung nur durch Fachpersonal möglich ist, um eine Vielzahl von Faktoren, wie die genannten Verträge bei der Aktualisierung zu beachten, und andererseits darin, dass der Aktualisierungsprozess genau geplant sein muss oder gegebenenfalls einen langen Zeitraum in Anspruch nimmt.

Aufgabe der vorliegenden Erfindung ist es daher, den Problemen des Standes der Technik zu begegnen. Insbesondere soll eine Lösung gefunden werden, mit der Einheiten eines Windparks schneller und sicherer mit einer aktuellen Software aktualisierbar sind. Zumindest soll aber eine alternative Lösung zum Stand der Technik vorgeschlagen werden.

Erfindungsgemäß wird ein Verfahren zum Aktualisieren mindestens einer Einheit eines Windparks gemäß Anspruch 1 vorgeschlagen.

Demnach wird ein Verfahren zum Aktualisieren mindestens einer Einheit mindestens eines von mehreren Windparks vorgeschlagen, wobei die Einheit insbesondere eine Windenergieanlage ist. Alternativ kann die Einheit eine STATCOM-Einheit, ein Akkumulator oder eine Windparksteuerung des Windparks sein.

Ein Windpark gemäß der Offenbarung der vorliegenden Erfindung ist vorzugsweise eine Einheit aus mehreren Windenergieanlagen, die an einem gemeinsamen Einspeisepunkt ihre elektrische Energie in ein Netz, wie ein Versorgungsnetz, einspeisen. Vorzugsweise ist den Windenergieanlagen eines Windparks eine übergeordnete Steuerinstanz des Windparks, die als Windparksteuerung bezeichnet wird, zugeordnet, wobei die Windparksteuerung vorzugsweise ebenfalls örtlich im Verbund mit den zugeordneten Windenergieanlagen, also im Windpark, angeordnet ist. Besonders bevorzugt weist der Windpark ein internes Datennetzwerk auf, wobei das interne Datennetzwerk einen Austausch von Daten zwischen der Windparksteuerung und den einzelnen Windenergieanlagen des Windparks erlaubt. Vorzugsweise ist auch eine externe Datenverbindung vorgesehen, die die Windparksteuerung eines Windparks mit einem zum Windpark extern gelegenen externen Datennetzwerk, das also außerhalb des Windparks liegt, verbindet.

Gemäß einer bevorzugten Alternative sind mehrere oder alle Windenergieanlagen des Windparks vorzugsweise über eine eigene externe Datenverbindung mit einem außerhalb des Windparks liegenden externen Datennetzwerk verbindbar oder verbunden, um Daten beispielsweise windparkübergreifend auszutauschen. In diesem Fall ist eine Windparksteuerung vorzugsweise dennoch vorhanden, um die Windenergieanlagen über eine interne Datenverbindung zu koordinieren. Die Windparksteuerung ist jedoch im Fall, dass die Windenergieanlagen mit einem externen Netzwerk über eine externe Datenverbindung jeweils verbunden sind, nicht zwingend vorhanden.

Gemäß dem Verfahren erfolgt die Aktualisierung mit einer Aktualisierungseinrichtung, die außerhalb des Windparks angeordnet ist und mit einer externen Datenverbindung mit einer oder mehreren Einheiten des Windparks verbunden ist.

Die Aktualisierungseinrichtung umfasst eine Datenbank. Die Datenbank umfasst Einträge für mehrere Einheiten mehrerer Windparks, deren Software durch die Aktualisierungseinrichtung aktualisierbar ist. Diese Datenbank wird in der Aktualisierungseinrichtung bereitgestellt. Ferner wird eine Auswahl durch die Aktualisierungseinrichtung empfangen, wobei die Auswahl mindestens eine Einheit aus der Datenbank umfasst. Die Auswahl zeigt also mindestens eine Einheit an. Das Empfangen der Auswahl erfolgt beispielsweise, nachdem ein Benutzer ein oder mehrere Einheiten ausgewählt hat und diese Auswahl bestätigt. Die Auswahl zeigt demnach die ausgewählten Einheiten an. Ferner ist die Aktualisierungseinrichtung eingerichtet, ein Paket für einen Windpark zusammenzustellen. Demnach wird durch die Aktualisierungseinrichtung zumindest ein Paket für den Windpark zusammengestellt, der die Einheit oder die Einheiten der Auswahl umfasst. Demnach wird ein Paket in der Aktualisierungseinrichtung genau für die Einheit oder Einheiten der Auswahl bereitgestellt, das für genau den Windpark zusammengestellt ist, der die Einheit oder die Einheiten umfasst.

Das Paket umfasst dabei zumindest eine Softwareaktualisierungsdatei oder im Fall, dass für eine Einheit mehrere Softwareaktualisierungsdateien, beispielsweise für mehrere Komponenten oder Module der Einheit, bereitstehen, mehrere Softwareaktualisierungsdateien jeweils für jedes der Module. Daraufhin wird das Paket durch die Aktualisierungseinrichtung von der Aktualisierungseinrichtung in den Windpark mit der Einheit der Auswahl übertragen. Die Aktualisierungseinrichtung ist somit eingerichtet, eine Datenverbindung mit dem Windpark herzustellen und das Paket, das für einen vordefinierten Windpark zusammengestellt wurde, an den entsprechenden Windpark zu übertragen.

Nach dem Übertragen wird eine Information durch die Aktualisierungseinrichtung ausgegeben, die die Fertigstellung der Übertragung anzeigt. Das Ausgeben der Information kann beispielsweise durch die Aktualisierungseinrichtung an einen Benutzer erfolgen, beispielsweise durch Absenden einer Push-Nachricht, vorzugsweise als E-Mail oder einer Kurzmitteilung an ein Mobiltelefon. Alternativ oder zusätzlich kann das Ausgeben der Information durch bloßes Anzeigen einer Anzeige mit der Aktualisierungseinrichtung erfolgen.

Daraufhin wird auf den Empfang einer Genehmigung der Aktualisierung, also einer Ausführung der Softwareaktualisierungsdatei, vorzugsweise auf der oder durch die zugeordnete Einheit oder Steuereinheit gewartet. Das heißt, dass die Aktualisierung mit der Softwareaktualisierungsdatei nicht augenblicklich ausgeführt wird, sondern dass zunächst auf den Empfang der Genehmigung gewartet wird. Erst nach dem Empfang der Genehmigung wird die Aktualisierung ausgeführt. Die Genehmigung kann beispielsweise die Freigabe der Softwareaktualisierung durch einen Servicetechniker, beispielsweise durch eine Eingabe an der Einheit erfolgen. Vorzugsweise wird dann die Aktualisierung ausgeführt, also die Software der Einheit oder einer oder mehrere Komponenten der Einheit mit den jeweiligen Softwareaktualisierungsdateien angepasst oder aktualisiert.

Nachdem die Aktualisierung der Einheit mit der Softwareaktualisierungsdatei oder allen Softwareaktualisierungsdateien eines Pakets ausgeführt wurde, empfängt die Aktualisierungseinrichtung eine Bestätigung über eine erfolgreiche Aktualisierung und speichert einen Indikator, der die erfolgreiche Aktualisierung anzeigt, in der Datenbank. Der Indikator umfasst demnach für die Einheit beispielsweise einen Identifikator der Komponente der Einheit sowie eine Versionsnummer der Software, die mit der Softwareaktualisierungsdatei erhalten wurde. Demnach umfasst die Datenbank vorzugsweise auch immer alle aktuellen Versionsnummern jeder aktualisierbaren Software der aktualisierbaren Einheiten.

Durch die Aktualisierungseinrichtung, die sich außerhalb des Windparks befindet, und mit der sich eine Vielzahl von Windparks, nämlich deren Einheiten, aktualisieren lassen, ist eine zentrale Einrichtung geschaffen, die zunächst eine Zusammenstellung der für die jeweilige Einheit verfügbaren Softwareaktualisierungsdateien automatisiert ermöglicht. Ein Servicemitarbeiter muss somit nicht mehr vor Ort der Einheit Softwareaktualisierungsdateien bereithalten und übertragen oder laden. Ein zeitlich verkürzter Einsatz vor Ort der Einheit ist somit möglich, da die Software bereits in der Einheit oder zumindest im Windpark vorliegt und ein Servicemitarbeiter beispielsweise lediglich nur noch die Ausführung der Aktualisierung durch Erteilen einer Genehmigung starten muss. Alternativ ist sogar eine Genehmigungserteilung aus der Ferne möglich, so dass ein Servicemitarbeiter nicht mehr vor Ort sein muss. Vorzugsweise ist jedoch eine Genehmigung erforderlich, die von der zu aktualisierenden Einheit, also der Einheit der Auswahl, oder vom Windpark, in dem die Einheit angeordnet ist, direkt vor Ort der Einheit oder des Windparks entgegengenommen wird, um sicherzustellen, dass sich die Einheit, insbesondere, wenn es sich um eine Windenergieanlage handelt, in einem sicheren Zustand befindet.

Durch die Datenbank, in der mit dem Indikator für eine Einheit vermerkt wird, ob eine erfolgreiche Aktualisierung erfolgt ist, ist somit beim Empfangen oder Bereitstellen neuer Softwareaktualisierungsdateien prüfbar, ob für eine Einheit diese neue Softwareaktualisierungsdatei nötig oder möglich ist. Ist diese nötig oder möglich, wird diese vorzugsweise entsprechend in das Paket eingestellt, wenn die Einheit ausgewählt wurde.

Vorzugsweise umfasst das Verfahren daher auch das Bereitstellen und Informieren oder Senden einer noch bislang unbekannten Softwareaktualisierungsdatei an die Aktualisierungseinrichtung. Alternativ oder zusätzlich umfasst das Verfahren das Empfangen einer der Aktualisierungseinrichtung noch bislang unbekannten Softwareaktualisierungsdatei oder zumindest das Empfangen einer Information über die Bereitstellung einer der Aktualisierungseinrichtung noch bislang unbekannten Softwareaktualisierungsdatei. Ferner werden dann vorzugsweise nach dem Empfang der Information über die Bereitstellung einer der Aktualisierungseinrichtung noch bislang unbekannten Softwareaktualisierungsdatei oder dem Empfang der noch bislang unbekannten Softwareaktualisierungsdatei selbst mit der Datenbank aktualisierbare Einheiten erfasst und Informationen über die Aktualisierbarkeit der erfassten aktualisierbaren Einheiten, beispielsweise an Betreiber, Servicemitarbeiter oder andere Stellen, ausgegeben. Daraufhin wird auf die Auswahl gewartet.

Demnach wird auch die Fehleranfälligkeit beispielsweise durch falsche oder unerlaubte Softwareaktualisierungen reduziert.

Gemäß einer ersten Ausführungsform wird im Fall, dass die Auswahl eine oder mehrere Einheiten mehrerer unterschiedlicher Windparks umfasst, für jeden Windpark jeweils ein entsprechendes Paket zusammengestellt. Ein Paket wird somit windparkindividuell erzeugt und ist nur für den vorgesehenen Windpark verwendbar. Das entsprechende Paket wird dann an den jeweiligen Windpark übertragen. Vorzugsweise umfasst daher jedes Paket windparkindividuelle Daten, wie beispielsweise eine Kennung des Windparks.

Jeder Windpark erhält somit ein für die Einheit oder Einheiten der Auswahl individuell vorgesehenes Paket. Alternativ gemäß einer weiteren Ausführungsform wird im Fall, dass die Auswahl eine oder mehrere Einheiten mehrerer gleicher oder unterschiedlicher Windparks umfasst, für jede Einheit der Auswahl ein eigenes Paket zusammengestellt, das jeweils die eine oder die mehreren Softwareaktualisierungsdateien, die für die jeweilige Einheit der Auswahl bereitstehen, umfasst. Die Pakete werden dann jeweils an die entsprechende Einheit übertragen.

Gemäß einer weiteren Ausführungsform umfasst jeder Eintrag in der Datenbank, der jeweils einer Einheit zugeordnet ist, eine Konfiguration der Einheit. Eine Konfiguration umfasst beispielsweise zumindest eine Liste, die alle Komponenten oder zumindest alle aktualisierbaren Komponenten der Einheit umfasst oder anzeigt. Zusätzlich oder alternativ umfasst jeder Eintrag in der Datenbank mindestens einen Parameter der Einheit. Parameter bezeichnen hier Werte, die für eine bestimmte Software vorgegeben werden und die einen Einfluss auf den Programmablauf haben. Das Programm wird demnach durch Parameter eingestellt.

Ferner umfasst das Verfahren das Abrufen der Konfiguration und Einfügen der Softwareaktualisierungsdateien für mindestens eine Einheit der Auswahl, die gemäß ihrer Konfiguration für die Einheit geeignet sind oder bereitgestellt sind. Vorzugsweise werden, auch wenn die Konfiguration eine Vielzahl von aktualisierbaren Komponenten angibt, nur Softwareaktualisierungsdateien, die verfügbar und vorzugsweise genehmigt sind, in das Paket eingefügt. Außerdem werden vorzugsweise nur Softwareaktualisierungsdateien in das Paket eingefügt, die eine Software der Einheit auf eine höhere Versionsnummer aktualisieren.

Alternativ oder zusätzlich wird mindestens ein Parameter der Einheit in das Paket eingefügt und besonders bevorzugt nach dem Ausführen der Aktualisierung der Einheit die Einheit mit den Parametern des Pakets parametriert. Durch die Konfiguration ist somit genau definierbar, welche verfügbaren und genehmigten Softwareaktualisierungen für eine ausgewählte Einheit in das Paket eingefügt werden müssen. Durch zusätzliches Bereitstellen von Parametern im Paket ist nach der Aktualisierung eine Neuparametrierung möglich.

Gemäß einer weiteren Ausführungsform wird vor dem Empfangen einer Auswahl zunächst mindestens eine Softwareaktualisierungsdatei durch die Aktualisierungseinrichtung empfangen. Alternativ wird der Aktualisierungseinrichtung mindestens eine Softwareaktualisierungsdatei bereitgestellt oder die Aktualisierungseinrichtung über eine neu bereitgestellte Softwareaktualisierungsdatei informiert. Das Bereitstellen umfasst beispielsweise das Informieren der Aktualisierungseinrichtung über eine neu verfügbare Softwareaktualisierungsdatei. Im darauffolgenden Schritt wird mit der Aktualisierungseinrichtung bestimmt, welche der Einheiten in der Datenbank mit der Softwareaktualisierungsdatei, die empfangen oder die bereitgestellt wurde, aktualisierbar sind. Daraufhin werden Informationen, die mehrere oder alle bestimmten Einheiten anzeigen, ausgegeben und mehrere oder alle bestimmten Einheiten als auswählbare Einheiten für die Auswahl bereitgestellt.

Die Aktualisierungseinrichtung erkennt somit vorzugsweise automatisch, sobald eine neue Softwareaktualisierungsdatei bereitsteht und informiert durch Ausgeben von Informationen beispielsweise Benutzer, Betreiber oder Servicemitarbeiter über neu verfügbare Softwareaktualisierungsdateien. Daraufhin kann ein Benutzer oder Servicemitarbeiter entsprechend die Einheiten auswählen. Ein Benutzer, Betreiber oder Servicemitarbeiter muss demnach nicht ständig prüfen, ob neue Softwareaktualisierungsdateien zur Verfügung stehen, sondern wird durch die Informationen darüber informiert, so dass eine gezielte Auswahl aktualisierbarer Einheiten möglich ist.

Gemäß einer weiteren Ausführungsform wird nach dem Empfangen oder Bereitstellen mindestens einer neuen Softwareaktualisierungsdatei, insbesondere einer Softwareaktualisierungsdatei eines bestimmten Typs oder einer bestimmten Version, eine vordefinierte maximale Anzahl, die beispielsweise in der Datenbank oder in der Softwareaktualisierungsdatei selbst enthalten ist, für die neue Softwareaktualisierungsdatei bestimmt. Die maximale Anzahl entspricht beispielsweise einer Anzahl von 10, 100 oder 1000. Vorzugsweise wird diese maximale Anzahl in Abhängigkeit von einem Zeitverlauf bis zu einer Gesamtzahl erhöht. Die Gesamtzahl entspricht allen mit der Aktualisierungseinrichtung aktualisierbaren Einheiten mit der neuen Softwareaktualisierungsdatei. Die Erhöhung mit dem Zeitverlauf entspricht beispielsweise der Erhöhung um einen bestimmten Wert, wie etwa 10, pro Zeitintervall, wie etwa pro Woche oder Monat. Ferner werden nur Informationen über die neu verfügbare Softwareaktualisierungsdatei für eine der maximalen Anzahl entsprechende Anzahl von Einheiten ausgegeben und diese Einheiten als auswählbare Einheiten bereitgestellt. Der Zeitverlauf entspricht beispielsweise einer Erhöhung der maximalen Anzahl um den Faktor 10 pro Woche oder pro Monat.

So kann verhindert werden, dass eine Softwareaktualisierungsdatei, die trotz sorgfältiger Entwicklung noch Fehler aufweisen kann, nicht automatisch in allen Einheiten sofort verwendet wird, sondern sukzessive alle mit der Aktualisierungseinrichtung aktualisierbaren Einheiten aktualisiert werden. Ein vollständiger Ausfall aller mit der Aktualisierungseinrichtung aktualisierbaren Einheiten bei fehlerhafter Software wird somit verhindert.

Gemäß einer weiteren Ausführungsform wird nach dem Empfangen oder Bereitstellen mindestens einer neuen Softwareaktualisierungsdatei, insbesondere einer Softwareaktualisierungsdatei eines bestimmten Typs oder einer bestimmten Version, eine vordefinierte maximale Anzahl, die beispielsweise in der Datenbank oder in der Softwareaktualisierungsdatei selbst enthalten ist, für die neue Softwareaktualisierungsdatei bestimmt. Die maximale Anzahl entspricht beispielsweise einer Anzahl von 10, 100 oder 1000Alternativ oder zusätzlich zu einer Erhöhung der maximalen Anzahl in Abhängigkeit von einem Zeitverlauf wird die Anzahl der übertragenen Pakete und/oder der ausgeführten Aktualisierungen durch die Aktualisierungseinrichtung erfasst und die maximale Anzahl in Abhängigkeit von der erfassten Anzahl erhöht.

Eine Softwareaktualisierungsdatei wird somit nur für eine bestimmte Anzahl von Einheiten zur Installation freigegeben und es erfolgt in Abhängigkeit vom Zeitverlauf und/oder der Anzahl der bereits ausgeführten Aktualisierungen individuell für die Softwareaktualisierungsdatei eine kontinuierliche Ausrollung.

Gemäß einer weiteren Ausführungsform erfolgt das Zusammenstellen des oder der Pakete in Abhängigkeit von einer Bandbreite und/oder einer Länge einer internen Datenverbindung des Windparks, in dem die Einheit, die dem Paket zugeordnet ist, angeordnet ist.

Das heißt, dass in der Datenbank für die den Einheiten zugeordneten Windparks Bandbreiten oder Längen von internen Datenverbindungen, mit denen Daten innerhalb des Windparks ausgetauscht werden, hinterlegt sind. Das Zusammenstellen erfolgt dann in Abhängigkeit von einer Bandbreite und/oder einer Länge der internen Datenverbindung. Vorzugsweise erfolgt das Zusammenstellen derart, dass das jeweilige Paket für den Windpark in mehrere Teilpakete mit einer vordefinierten maximalen Datengröße zusammengestellt wird. Demnach ist die Anzahl der Teilpakete oder der maximalen Datengröße pro Teilpaket abhängig von der Bandbreite oder Länge.

Hierdurch kann sichergestellt werden, dass eine Aktualisierung von Einheiten innerhalb eines älteren Windparks, der über eine interne Datenverbindung mit nur geringer Bandbreite verfügt, möglich ist. Große Datenmengen werden nämlich in Form der Teilpakete mit maximaler Datengröße übertragen . Solche älteren Windparks umfassen beispielsweise eine serielle Datenverbindung zwischen einer Windparksteuerung und einer Windenergieanlage, deren Limitierung sonst bei der Übertragung von Paketen mit zu großer Datengrö-ßen fehlerhaft verlaufen würde.

Softwareaktualisierungsdateien für Windparks mit internen Datenverbindungen, die eine geringe Bandbreite aufweisen, sind somit ebenfalls möglich.

Gemäß einer weiteren Ausführungsform sind in der Datenbank Vertragsdaten für jede Einheit oder jeden der Einheit zugeordneten Windpark hinterlegt. Nach dem Empfang oder dem Bereitstellen einer neuen Softwareaktualisierungsdatei wird daher in der Datenbank geprüft, ob die neue Softwareaktualisierungsdatei für entsprechende Einheiten zur Aktualisierung unter Berücksichtigung der hinterlegten Vertragsdaten verwendbar oder erlaubt ist. Nur im Fall, dass die hinterlegten Vertragsdaten für die Einheit oder den Windpark, der die Einheit angehört, eine Aktualisierung erlauben, wird die Softwareaktualisierungsdatei freigegeben, beispielsweise, indem Informationen ausgegeben werden, die eine zur Verfügung stehende Softwareaktualisierungsdatei für die Einheit anzeigen, und/oder die Einheit als auswählbare Einheit bereitgestellt wird.

Ein Servicemitarbeiter muss somit keine Kenntnis über Vertragsdaten haben, die möglicherweise relevant dafür sind, ob eine zur Verfügung stehende Softwareaktualisierungsdatei auf einer bestimmten Einheit ausgeführt werden darf oder nicht.

Gemäß einer weiteren Ausführungsform wird das Warten auf den Empfang der Genehmigung und/oder das Ausführen der Aktualisierung von der Einheit der Auswahl oder einer weiteren Einheit des Windparks, in dem die Einheit der Auswahl angeordnet ist, ausgeführt. Demnach muss ein Servicemitarbeiter die Genehmigung vor Ort der Einheit erteilen, indem er beispielsweise ein passender Zeitraum gefunden und ausgewählt hat und/oder ein Status der Windenergieanlage überprüft wurde. Zusätzlich oder alternativ wird die Aktualisierung ebenfalls von der Einheit, beispielsweise der Windenergieanlage selbst, oder einer weiteren Einheit, wie einer Windparksteuerung, nach Empfang der Genehmigung ausgeführt.

Somit kann sichergestellt werden, dass eine Vor-Ort-Prüfung der Einheit erfolgen muss, bevor die Aktualisierung ausgeführt wird. Unsichere Betriebszustände, bei denen die Windenergieanlage möglicherweise in einen undefinierten Zustand geraten könnte, werden somit vermieden.

Gemäß einer weiteren Ausführungsform umfasst ein Paket mehrere unterschiedliche Softwareaktualisierungsdateien für entsprechende mehrere Komponenten einer Einheit, wobei jede der Komponenten einer Einheit mit der entsprechenden Softwareaktualisierungsdatei aktualisiert wird.

Eine Aktualisierung mehrerer Komponenten einer Einheit kann somit gleichzeitig ausgeführt werden.

Gemäß einer weiteren Ausführungsform wird die Einheit nach dem Empfang der Genehmigung in einen vordefinierten sicheren Zustand überführt oder es wird geprüft, ob sich die Einheit bereits in einem vordefinierten sicheren Zustand befindet. Die Aktualisierung wird nur ausgeführt, wenn die Einheit den sicheren Zustand aufweist.

Somit kann verhindert werden, dass ein undefinierter Zustand während einer Aktualisierung durch die Einheit eingenommen wird, durch die die Gefahr der Beschädigung der Einheit besteht. Eine Beschädigung oder Fehlfunktion kann somit verhindert werden.

Gemäß einer weiteren Ausführungsform werden nach Auswählen einer Einheit aus der Datenbank alle Komponenten der Einheit mit der Aktualisierungseinrichtung erfasst und das Paket für die Einheit derart erzeugt, dass alle verfügbaren und, insbesondere vertraglich erlaubten, Softwareaktualisierungen für die Komponenten der Einheit im Paket bereitgestellt werden.

Gemäß einer weiteren Ausführungsform umfasst das Warten auf den Empfang einer Genehmigung das Warten auf eine Eingabe einer Komponente der Einheit des Windparks oder der Aktualisierungseinrichtung. Die Genehmigung umfasst vorzugsweise auch einen vorgegebenen Zeitraum für die Aktualisierung. Die Aktualisierung wird dann im vorgegebenen Zeitraum ausgeführt. Geeignete Zeiträume für eine Aktualisierung, werden beispielsweise als Zeiträume bestimmt, in denen basierend auf Prognosen nur ein schwacher Wind weht oder wenig Energiebedarf herrscht.

Außerdem betrifft die Erfindung ein System, das eingerichtet ist, das Verfahren nach einer der vorgenannten Ausführungsformen auszuführen.

Gemäß einer Ausführungsform des Systems umfasst das System eine Aktualisierungseinrichtung, die eingerichtet ist, eine Datenbank bereitzustellen, eine Auswahl zu empfangen, ein Paket zusammenzustellen, das Paket zu übertragen und eine Bestätigung über eine erfolgreiche Aktualisierung zu empfangen.

Gemäß einer weiteren Ausführungsform umfasst das System einen oder mehrere Windparks mit jeweils mehreren Einheiten, insbesondere Windenergieanlagen.

Weitere Ausführungsformen ergeben sich anhand der in den Figuren näher erläuterten Ausführungsbeispiele. Hierbei zeigen:
Fig. 1 eine Windenergieanlage,
Fig. 2 eine Aktualisierungseinrichtung mit mehreren Windparks und
Fig. 3 den Ablauf eines Ausführungsbeispiels des Verfahrens.

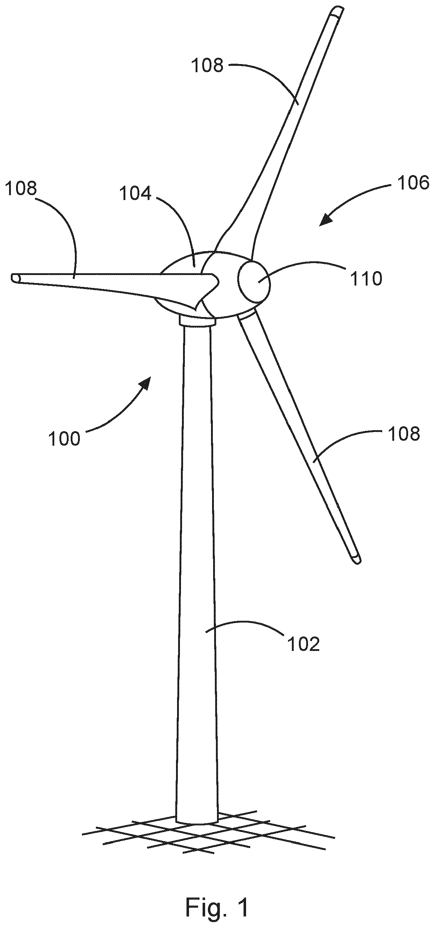

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

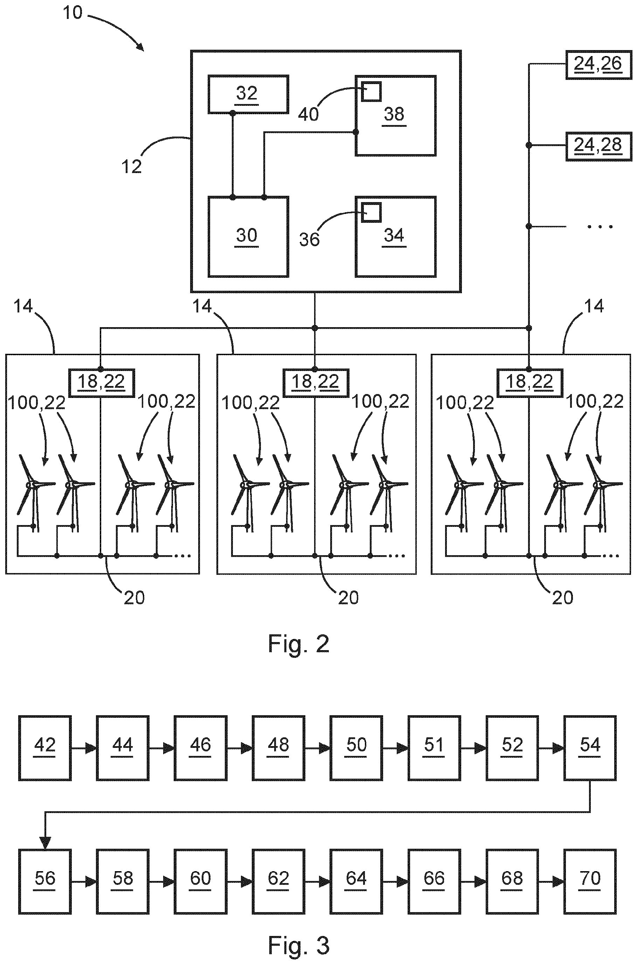

Fig. 2 zeigt ein System 10 gemäß einem Ausführungsbeispiel. Das System 10 umfasst eine Aktualisierungseinrichtung 12 und mehrere Windparks 14, die über ein externes Datennetzwerk 16 mit der Aktualisierungseinrichtung 12 zum Austausch von Daten verbunden sind. Jeder der Windparks 14 umfasst eine Windparksteuerung 18 sowie mehrere Windenergieanlagen 100, wobei die Windenergieanlagen 100 über ein internes Datennetzwerk 20 mit der Windparksteuerung 18 des entsprechenden Windparks 14 verbunden sind. Die Windparksteuerung 18 stellt wiederum eine Verbindung zwischen dem internen Datennetzwerk 20 und dem externen Datennetzwerk 16 bereit. Die Windenergieanlagen 100 sowie die Windparksteuerung 18 können auch als Einheiten 22 des jeweiligen Windparks 14 bezeichnet werden.

Mit dem externen Datennetzwerk 16, das beispielsweise dem Internet entspricht, sind weitere Rechnereinheiten 24 verbunden, die beispielsweise einem Betreiber eines oder mehrerer der Windparks 14 zuzuordnen und daher auch als Betreiber-PC 26 zu bezeichnen sind. Die Rechnereinheiten 24 können auch Servicemitarbeitern zugeordnet sein und sind daher als Service-PC 28 zu bezeichnen. Die Aktualisierungseinrichtung 12 umfasst eine Prozessoreinheit 30, die mehrere oder alle Schritte des erfindungsgemäßen Verfahrens ausführen kann. Die Prozessoreinheit 30 ist beispielsweise mit einer Anzeige 32 verbunden, um verschiedene Zustände der Aktualisierungseinrichtung 12 anzuzeigen oder Informationen auszugeben. Die Anzeige 32 kann auch außerhalb der Aktualisierungseinrichtung 12 angeordnet sein und beispielsweise durch eine der Rechnereinheiten 24 gebildet werden. Die Prozessoreinheit 30 ist mit einer Datenbank 34 der Aktualisierungseinrichtung 12 verbunden, um Einträge 36 in der Datenbank 34 abzurufen, zu erzeugen oder zu ändern. Außerdem ist ein Softwarespeicher 38 in der Aktualisierungseinrichtung 12 dargestellt, mit dem Softwareaktualisierungsdateien 40 für die Einheiten 22 der Windparks 14 bereitstellbar sind.

Fig. 3 zeigt den Ablauf eines Ausführungsbeispiels des Verfahrens. In einem Schritt 42 wird zunächst der Aktualisierungseinrichtung 12 eine Information über eine neue Softwareaktualisierungsdatei 40 bereitgestellt. Diese Information zeigt beispielsweise an, dass in einem Softwarespeicher 38 eine der Aktualisierungseinrichtung 12 bislang unbekannte Softwareaktualisierungsdatei 40 bereitgestellt wurde. Der Softwarespeicher 38 kann Bestandteil der Aktualisierungseinrichtung 12 sein oder außerhalb der Aktualisierungseinrichtung 12 liegen.

Die Aktualisierungseinrichtung 12 prüft im Schritt 44, für welche Einheiten 22 die neue Softwareaktualisierungsdatei 40 verwendet werden kann. In einem Schritt 46 werden entweder über eine Anzeige 32 oder über Nachrichten oder Informationen an Rechnereinheiten 24, Betreiber oder Servicemitarbeiter über eine verfügbare Softwareaktualisierungsdatei 40 für bestimmte Einheiten 22 informiert. In der Aktualisierungseinrichtung 12 werden außerdem im Schritt 48 die erfassten Einheiten 22 als auswählbare Einheiten 22 bereitgestellt. Beispielsweise über die Rechnereinheiten 24 kann dann im Schritt 50 ein Betreiber oder Servicemitarbeiter Einheiten 22, die auswählbar sind, auswählen.

Die Aktualisierungseinrichtung 12 empfängt daher im Schritt 51 eine Auswahl, die eine oder mehrere ausgewählte Einheiten 22 umfasst. Im Schritt 52 wird für jede Einheit 22 oder für mehrere Einheiten 22 eines Windparks 14 ein Paket bereitgestellt, das eine oder mehrere der Softwareaktualisierungsdateien 40 umfasst. Im Schritt 54 wird das oder jedes der Pakete an die vorgesehene Einheit 22 oder die vorgesehenen Einheiten 22 übertragen. Im Schritt 56 wird eine Rückmeldung von der Einheit 22 oder dem Windpark 14 erhalten, dass das Paket bei der Einheit 22 vorliegt, also das Übertragen 54 erfolgreich war. Im Schritt 58 wird dann auf eine Genehmigung für das Ausführen einer Aktualisierung gewartet.

Im Schritt 60 wird von einem Servicemitarbeiter die Einheit 22, beispielsweise die Windenergieanlage 100 in einen sicheren Zustand überführt. Nachdem im Schritt 62 geprüft wurde, ob sich die Windenergieanlage 100 in dem sicheren Zustand befindet, wird im Schritt 64 die Genehmigung erteilt. Im Schritt 66 wird dann eine Aktualisierung der Einheit 22 innerhalb der Einheit 22 ausgeführt und nach einer erfolgreichen Ausführung im Schritt 68 eine erfolgreiche Ausführung zurück an die Aktualisierungseinrichtung 12 gemeldet. Im Schritt 70 wird in der Datenbank 34 vermerkt, dass die Windenergieanlage 100 erfolgreich aktualisiert wurde.

### Bezugszeichenliste

- 10: System
- 12: Aktualisierungseinrichtung
- 14: Windparks
- 16: externes Datennetzwerk
- 18: Windparksteuerung
- 20: internes Datennetzwerk
- 22: Einheiten
- 24: Rechnereinheiten
- 26: Betreiber-PC
- 28: Service-PC
- 30: Prozessoreinheit
- 32: Anzeige
- 34: Datenbank
- 36: Einträge
- 38: Softwarespeicher
- 40: Softwareaktualisierungsdateien
- 42: Bereitstellen Information
- 44: Prüfen Softwareeinheit
- 46: Informieren Betreiber oder Servicemitarbeiter
- 48: Bereitstellen Einheiten
- 50: Auswählen Einheiten
- 51: Empfang Auswahl
- 52: Bereitstellen Paket
- 54: Übertragen Paket
- 56: Erhalten Rückmeldung
- 58: Warten auf Genehmigung
- 60: Überführen Einheit
- 62: Überprüfen Zustand
- 64: Erteilen Genehmigung
- 66: Ausführen Aktualisierung
- 68: Melden erfolgreiche Ausführung
- 70: Vermerken erfolgreiche Aktualisierung
- 100: Windenergieanlage
- 102: Turm
- 104: Gondel
- 106: aerodynamischer Rotor
- 108: Rotorblätter
- 110: Spinner

## Patentansprüche

1. Verfahren zum Aktualisieren mindestens einer Einheit (22), insbesondere einer Windenergieanlage (100), mindestens eines von mehreren Windparks (14), mit einer außerhalb des Windparks (14) angeordneten Aktualisierungseinrichtung, wobei die Aktualisierungseinrichtung eingerichtet ist, eine Datenverbindung mit mehreren Windparks (14) aufzubauen und das Verfahren umfasst:
- Bereitstellen einer Datenbank (34), in der Einträge (36) für mehrere Einheiten (22) mehrerer Windparks (14) enthalten sind, deren Software durch die Aktualisierungseinrichtung aktualisierbar ist, in der Aktualisierungseinrichtung,
- Empfangen einer Auswahl mindestens einer Einheit (22) aus der Datenbank (34) durch die Aktualisierungseinrichtung,
- Zusammenstellen eines Pakets für den Windpark (14), der die Einheit (22) der Auswahl umfasst, durch die Aktualisierungseinrichtung, wobei das Paket mindestens eine Softwareaktualisierungsdatei (40) für die Einheit (22) der Auswahl umfasst,
- Übertragen des Pakets durch die Aktualisierungseinrichtung von der Aktualisierungseinrichtung in den Windpark (14) mit der Einheit (22) oder die Einheit (22) der Auswahl,
- Ausgeben einer Information nach Fertigstellung der Übertragung durch die Aktualisierungseinrichtung,
- Warten auf den Empfang einer Genehmigung zur Ausführung der Aktualisierung,
- Ausführen der Aktualisierung nach Empfang einer Genehmigung,
- Empfangen einer Bestätigung über eine erfolgreiche Aktualisierung und
- Speichern eines Indikators über die erfolgreiche Aktualisierung in der Datenbank (34).

2. Verfahren nach Anspruch 1, wobei im Fall, dass die Auswahl eine oder mehrere Einheiten (22) mehrerer unterschiedlicher Windparks (14) umfasst, für jeden der Windparks (14) jeweils mindestens ein entsprechendes Paket zusammengestellt und an jeden der Windparks (14) jeweils das entsprechende Paket übertragen wird, wobei jedes Paket vorzugsweise eine Kennung des jeweiligen Windparks (14) umfasst.

3. Verfahren nach Anspruch 1 oder 2, wobei jeder Eintrag in der Datenbank (34) eine Konfiguration der zu dem Eintrag zugeordneten Einheit (22) umfasst, die alle oder zumindest alle aktualisierbaren Komponenten der Einheit (22) anzeigt und/oder jeder Eintrag in der Datenbank (34) mindestens einen Parameter der dem Eintrag zugeordneten Einheit (22) umfasst, wobei das Zusammenstellen das Abrufen der Konfiguration und eine Auswahl einer oder mehrerer Softwareaktualisierungsdateien (40) in Abhängigkeit von der Konfiguration für das Paket und/oder das Abrufen des Parameters und das Einfügen des Parameters in das Paket umfasst.

4. Verfahren nach einem der vorhergehenden Ansprüche, wobei das Verfahren vor dem Empfangen einer Auswahl umfasst:
- Empfangen mindestens einer Softwareaktualisierungsdatei (40) durch die Aktualisierungseinrichtung oder Empfangen einer Information über eine Bereitstellung mindestens einer Softwareaktualisierungsdatei (40) für die Aktualisierungseinrichtung,
- Bestimmen der mit der Aktualisierungseinrichtung und der empfangenen oder bereitgestellten Softwareaktualisierungsdatei (40) aktualisierbaren Einheiten (22), die in der Datenbank (34) enthalten sind, durch die Aktualisierungseinrichtung,
- Ausgeben von Informationen, die mehrere oder alle bestimmten Einheiten (22) anzeigen und
- Bereitstellen mehrerer oder aller bestimmten Einheiten (22) als auswählbare Einheiten (22) für die Auswahl.

5. Verfahren nach einem der vorhergehenden Ansprüche, wobei nach dem Empfangen oder Bereitstellen mindestens einer neuen Softwareaktualisierungsdatei (40) eine vordefinierte maximale Anzahl für die neue Softwareaktualisierungsdatei (40) bestimmt wird, wobei die vordefinierte maximale Anzahl, vorzugsweise in Abhängigkeit von einem Zeitverlauf, bis zu einer Gesamtzahl erhöht wird und wobei Informationen über die neu verfügbare Softwareaktualisierungsdatei (40) für eine der maximalen Anzahl entsprechende Anzahl von Einheiten (22) ausgegeben und diese Einheiten (22) als auswählbare Einheiten (22) bereitgestellt werden.

6. Verfahren nach Anspruch 5, wobei die Anzahl der übertragenen Pakete und/oder der ausgeführten Aktualisierungen durch die Aktualisierungseinrichtung für eine neue Softwareaktualisierungsdatei (40) erfasst und die maximale Anzahl in Abhängigkeit von der erfassten Anzahl bis zur Gesamtzahl erhöht wird.

7. Verfahren nach einem der vorhergehenden Ansprüche, wobei das Zusammenstellen eines Pakets in Abhängigkeit von einer Bandbreite und/oder einer Länge einer internen Datenverbindung (20) innerhalb des jeweiligen Windparks (14) erfolgt, in dem die Einheit (22), der das Paket zugeordnet ist, angeordnet ist, wobei vorzugsweise das Paket in mehrere Teilpakete mit einer vordefinierten maximalen Datengröße zusammengestellt wird, wobei die Anzahl der Teilpakete und/oder maximale Datengröße jedes der Teilpakete in Abhängigkeit von der Bandbreite und/oder der Länge bestimmt wird.

8. Verfahren nach einem der vorhergehenden Ansprüche, wobei in der Datenbank (34) Vertragsdaten für jede Einheit (22) oder für jeden Windpark (14) hinterlegt sind und nach dem Empfang oder dem Bereitstellen einer neuen Softwareaktualisierungsdatei (40) oder zumindest vor dem Ausführen der Aktualisierung geprüft wird, ob die Softwareaktualisierungsdatei (40) für eine entsprechende Einheit (22) verwendbar oder erlaubt ist und vorzugsweise eine Information über eine Softwareaktualisierungsdatei (40) für eine Einheit (22) nur dann ausgegeben und/oder die Datei als auswählbare Einheit (22) bereitgestellt wird, wenn die Vertragsdaten eine Aktualisierung erlauben.

9. Verfahren nach einem der vorhergehenden Ansprüche, wobei das Warten auf den Empfang der Genehmigung und/oder das Ausführen der Aktualisierung von der Einheit (22) oder einer weiteren Einheit (22) ausgeführt wird.

10. Verfahren nach einem der vorhergehenden Ansprüche, wobei ein Paket mehrere unterschiedliche Softwareaktualisierungsdateien (40) für entsprechende mehrere Komponenten einer Einheit (22) umfasst und jede der Komponenten einer Einheit (22) mit der entsprechenden Softwareaktualisierungsdatei (40) aktualisiert wird.

11. Verfahren nach einem der vorhergehenden Ansprüche, wobei die Einheit (22) oder eine weitere Einheit (22) nach dem Empfang der Genehmigung die Einheit (22) in einen vordefinierten sicheren Zustand überführt oder prüft, ob sich die Einheit (22) bereits in einem vordefinierten sicheren Zustand befindet, wobei die Aktualisierung nur dann ausgeführt wird, wenn die Einheit (22) den sicheren Zustand aufweist.

12. Verfahren nach einem der vorhergehenden Ansprüche, wobei das Warten auf den Empfang einer Genehmigung das Warten auf eine Eingabe einer Komponente der Einheit (22) oder einer weiteren Einheit (22) des Windparks (14) oder der Aktualisierungseinrichtung umfasst, und die Genehmigung vorzugsweise einen vorgegebenen Zeitraum für die Aktualisierung umfasst.

13. System (10) zum Aktualisieren mindestens einer Einheit (22) eines Windparks (14), das eingerichtet ist, das Verfahren nach einem der Ansprüche 1 bis 12 auszuführen.

14. System (10) nach Anspruch 13, wobei das System (10) eine Aktualisierungseinrichtung umfasst, die eingerichtet ist, eine Datenbank (34) bereitzustellen, eine Auswahl zu empfangen, ein Paket zusammenzustellen, das Paket zu übertragen und eine Bestätigung über eine erfolgreiche Aktualisierung zu empfangen.

15. System (10) nach Anspruch 13 oder 14, wobei das System (10) mehrere Windparks (14) mit jeweils mehreren Einheiten (22), insbesondere Windenergieanlagen (100), umfasst.
